Europäisches Patentamt

European Patent Office

Office européen des brevets

(19)

(11) Numéro de publication: **0 213 978**
**B1**

(12) **FASCICULE DE BREVET EUROPEEN**

(45) Date de publication du fascicule du brevet:
**10.01.90**

(21) Numéro de dépôt: **86401471.7**

(22) Date de dépôt: **02.07.86**

(51) Int. Cl.⁴: **F16D 55/22, F16D 55/02**

(54) **Ensemble de patin de friction équipé d'un ressort anti-bruit pour frein à disque.**

(30) Priorité: **31.07.85 FR 8511687**

(43) Date de publication de la demande:
**11.03.87 Bulletin 87/11**

(45) Mention de la délivrance du brevet:
**10.01.90 Bulletin 90/2**

(84) Etats contractants désignés:
**BE DE GB IT NL**

(56) Documents cités:
**EP-A- 0 002 150**
**DE-A- 2 745 947**
**FR-A- 1 592 881**
**FR-A- 2 415 234**

(73) Titulaire: **BENDIX France, 126, rue de Stalingrad,**
**F-93700 Drancy(FR)**

(72) Inventeur: **Guineau, Jacques, 5, Avenue Victor Hugo,**
**F-92700 Colombes(FR)**

(74) Mandataire: **Lejet, Christian et al, BENDIX FRANCE**
**Division Technique Service Brevets Bendix**
**Europe 126 rue de Stalingrad, F-93700 Drancy(FR)**

## Description

La présente invention concerne les ensembles de patins de friction équipés d'un ressort anti-bruit pour frein a disque et, plus particulièrement, un ensemble du type comprenant une plaque porte-garniture comportant une partie supérieure, non revêtue d'une garniture de matériau de friction, pourvue de deux orifices traversants de réception de tiges de guidage de part et d'autre d'une partie centrale de montage de ressort comportant un logement, et un ressort en fil métallique élastique comportant une partie centrale reçue dans le logement et une première et une seconde ailes s'étendant de part et d'autre de cette partie centrale pour coopérer, en configuration assemblée dans le frein, en appui élastique avec les tiges de guidage, lesquelles sont typiquement solidaires d'un étrier coulissant de frein à disque.

Un ensemble de ce type est décrit dans le document GB-A 1 586 465. Dans l'agencement de ce document, la partie centrale du ressort fil est maintenue verrouillée en place par sertissage sur la plaque support de garniture qui doit, en conséquence, présenter, dans son bord supérieur, une fente avec une paroi rabattable. La technique décrite dans ce document ne permet pas de garantir un positionnement fiable et correct du ressort sur la plaque porte-garniture non plus qu'une interchangeabilité du ressort alors que l'opération de sertissage risque d'en altérer les caractéristiques mécaniques.

Un autre ensemble de ce type est décrit dans le document FR-A 1 592 881. Cet ensemble comprend: une plaque porte-garniture comportant une partie supérieure, non revêtue d'une garniture de matériau de friction, pourvue de deux orifices traversant de réception de tiges de guidage de part et d'autre d'une partie centrale de montage de ressort comportant une protubérance, et un ressort en fil métallique élastique comportant une partie centrale reçue sur la protubérance et une première et une seconde ailes s'étendant de part et d'autre de cette partie centrale pour coopérer en appui élastique avec les tiges de guidage.

Le préambule de la revendication unique reprend les caractéristiques de cet ensemble.

De plus, dans le document EP-A 2150 est décrit une plaque porte-garniture pour un ensemble de patin de friction comportant une partie de montage de ressort avec un logement constitué d'une ouverture traversante dans la plaque porte-garniture et un ressort à fil métallique élastique comportant une partie reçue dans le logement et une première et une seconde ailes s'étendant de part et d'autre de cette partie reçue dans le logement dans la plaque porte-garniture. La première desdites ailes de ressort en fil métallique élastique est constituée sous la forme d'un cadre oblong à deux branches longitudinales parallèles de largeur supérieure à l'épaisseur de la plaque porte-garniture et refermé par une branche transversale s'étendant au travers de l'ouverture dans la plaque porte-garniture et prolongée à repliement autour d'une desdites branches longitudinales.

La présente invention a pour objet une amélioration à un ensemble du type décrit dans le document GB-A 1 586 465 ou dans le document FR-A 1 592 881, de conception simple et robuste, de faibles coûts de fabrication, permettant un montage et un démontage aisés du ressort et garantissant un positionnement et un verrouillage corrects du ressort sur le patin de friction sans risquer d'en altérer les caractéristiques mécaniques.

Selon l'invention, une première aile du ressort comporte une extrémité libre rabattue dans la direction d'un épaulement du bord latéral de la partie supérieure de la plaque porte-garniture formé au voisinage de la garniture de friction, et l'ouverture qui comporte un passage d'accès débouchant latéralement, est formée dans une protubérance centrale de la partie supérieure de la plaque porte-garniture.

D'autres caractéristiques et avantages de la présente invention ressortiront de la description suivante d'un mode de réalisation, donné à titre illustratif mais nullement limitatif, faite en relation avec les dessins annexés, sur lesquels:

– la Figure 1 est une vue de face d'un ensemble de patin de friction équipé d'un ressort anti-bruit selon l'invention;
– la Figure 2 est une vue du dessus de l'ensemble de la Figure 1; et
– la Figure 3 est une vue en coupe transversale partielle suivant le plan de coupe III–III de la Figure 1.

L'ensemble représenté sur les Figures comprend, de façon classique, une plaque porte-garniture 1, d'épaisseur sensiblement constante, revêtue, sur une portion principale d'une de ses faces, d'une garniture de matériau de friction 2 laissant, à la partie supérieure de la plaque porte-garniture, une partie non revêtue conformée pour constituer une partie centrale 3 formant une protubérance de montage d'un ressort anti-bruit, désigné généralement par la référence 4, et deux parties latérales en saillie 5 dans chacune desquelles est ménagé un orifice traversant 6 destiné à recevoir, à coulissement lâche, une tige de guidage 7 solidaire d'une structure de frein à disque 8, typiquement un étrier coulissant par rapport à un support fixe (non représenté).

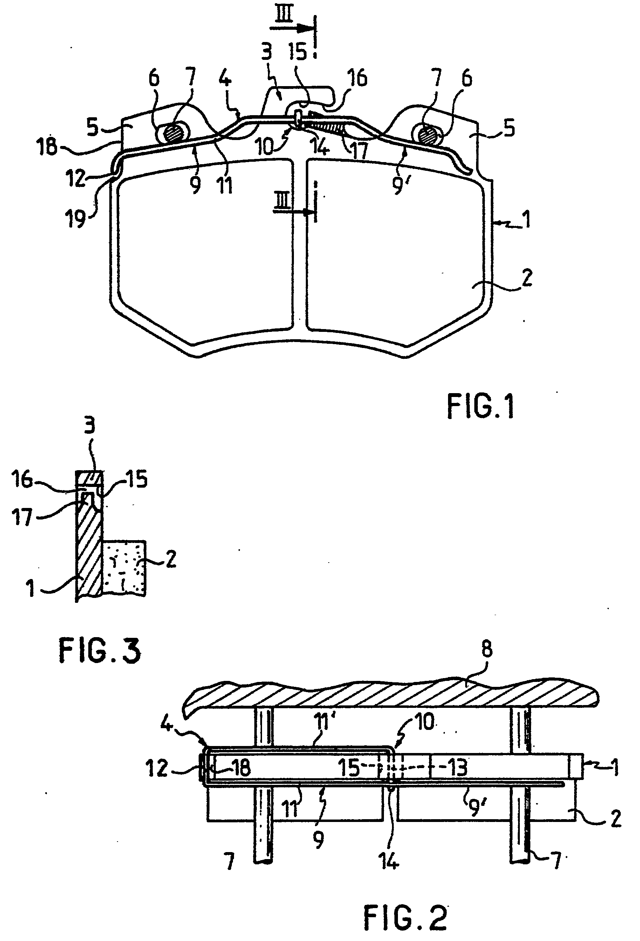

Conformément à l'invention, le ressort 4 est réalisé à partir d'un fil métallique élastique conformé pour constituer deux ailes 9, 9' s'étendant sensiblement symétriquement en rapport à une partie centrale de montage du ressort, désignée généralement par la référence 10. Comme on le voit bien sur la Figure 2, l'aile 9 est constituée sous la forme d'un cadre oblong à deux branches longitudinales parallèles 11 et 11' reliées, à leurs extrémités opposées à la partie centrale 10, par une branche d'extrémité transversale 12, le cadre de la première aile 9 étant refermé centralement par une branche transversale centrale 13 se prolongeant à repliement autour de la branche longitudinale 11 qui se prolonge continuement pour former la seconde aile 9' qui est, elle, monobrin, la seconde aile 9' et la branche 11 étant sensiblement coplanaires. Comme on le voit sur la Figure 2, la largeur transversale du cadre de la première aile 9 est légèrement supérieure à l'épaisseur de la plaque porte-garniture 1.

La branche transversale centrale 13 se prolonge à repliement autour du brin de la branche 11 et de la seconde aile 9' pour constituer une petite patte d'extrémité 14 s'étendant vers le haut, comme représenté sur les Figures. Selon un aspect de l'invention, dans la partie centrale 3 de la partie supérieure de la plaque porte-garniture 1 est ménagée une ouverture traversante 15, centrée sur le plan de symétrie du patin de friction et à un niveau, conformément à l'orientation générale de la Figure 1, supérieur à celui des orifices 6 de réception des tiges 7. L'ouverture 15 peut être fermée périphériquement ou, de préférence, comme représenté, comporte un passage d'accès de section réduite 16 débouchant dans un côté latéral de la partie centrale 3 de la plaque porte-garniture 1. L'ouverture 15 et le passage d'accès à section réduite 16 peuvent être formés directement par découpe, mais le passage d'accès 16 peut être légèrement refermé par déformation par frappe de la zone intérieure adjacente 17, comme on le voit sur la Figure 3.

Dans le mode de réalisation représenté, le bord latéral externe 18 d'au moins une saillie latérale 5 de la partie supérieure non revêtue de la plaque porte-garniture 1 opposée au passage d'accès 16 se raccorde à la partie principale revêtue de la plaque porte-garniture 1 par un épaulement 19 au voisinage de la partie supérieure de la garniture revêtement 2. Pour garantir un positionnement correct du ressort, l'extrémité de la première branche 9 opposée à la partie centrale 10 et formant la branche d'extrémité 12 s'étendant le long du bord supérieur est rabattue vers le bas, dans la direction vers l'épaulement 19, tandis que l'extrémité libre de la seconde aile 9' est également rabattue vers le bas, dans la direction du bord supérieur de la garniture de matériau de friction 2. De cette façon, comme on le voit sur la Figure 1, lorsque l'ensemble de patin de friction avec son ressort est mis en place dans le frein, en étant supporté et guidé par les tiges 7, la branche transversale centrale 13 est en appui contre le fond de l'ouverture 15, les ailes 9 et 9' étant fléchies vers le bas en appui contre les arêtes inférieures des tiges 7, l'extrémité repliée vers le bas de la première branche 9 se situant alors au voisinage immédiat de l'épaulement 19, et l'extrémité rabattue vers le bas de la seconde aile 9' se situant au voisinage du bord supérieur de la garniture 2.

Que l'ouverture 15 soit ouverte ou fermée, l'extension longitudinale, à partir de la branche centrale transversale 13, du cadre constituant la première aile 9 est supérieure à la distance entre le bord latéral 18 de la saillie latérale 5 et le bord adjacent de l'ouverture 15. Dans le cas d'une ouverture 15 fermée, le ressort est mis en place en dégageant la branche transversale 13 et sa patte d'extrémité 14 du brin de la branche 11 et de la seconde aile 9', pour l'introduire au travers de l'ouverture 15, après quoi, en abaissant le ressort dans la direction vers la garniture 2, la branche 13 et sa patte d'extrémité 14 se repositionnent élastiquement autour du brin 11–9' en verrouillant ainsi le ressort en configuration de montage avec le brin 11–9' s'étendant le long de la face de la plaque porte-garniture portant la garniture 2, la seconde branche 11' de la première aile 9 s'étendant le long de la face opposée de la plaque porte-garniture. Dans le cas (tel que représenté) d'une ouverture 15 avec passage d'accès 16, la branche transversale centrale 13 peut être introduite par le passage d'accès 16 en déformant légèrement la seconde aile 9' pour permettre le basculement de la branche d'extrémité 12 autour de l'angle supérieur de la saillie latérale 5 pour ramener ensuite le ressort dans la configuration normale de montage représentée.

De ce fait le ressort ne pouvant être libéré du patin que par une déformation inverse, est imperdable.

## Revendications

Ensemble de patin de friction équipé d'un ressort anti-bruit pour frein à disque, comprenant: une plaque porte-garniture (1) comportant une partie supérieure, non revêtue d'une garniture de matériau de friction (2), pourvue de deux orifices traversant (6) de réception de tiges de guidage (7) de part et d'autre d'une partie centrale de montage de ressort (3) comportant un logement (15) constitué d'une ouverture traversante, et un ressort en fil métallique élastique (4) comportant une partie centrale (10) reçue dans le logement (15) et une première (9) et une seconde (9') ailes s'étendant de part et d'autre de cette partie centrale (10) pour coopérer en appui élastique avec les tiges de guidage (7), caractérisé en ce que la première (9) desdites ailes du ressort (4) est constituée sous la forme d'un cadre oblong à deux branches longitudinales parallèles (11, 11'), de largeur supérieure à l'épaisseur de la plaque porte-garniture (1), en ce que ce cadre est refermé centralement par une branche transversale (13) s'étendant au travers de l'ouverture (15) et prolongée à repliement (14) autour d'une (11) desdites branches longitudinales, qui elle-même se prolonge continuement pour constituer la seconde aile (9') et comporte une branche transversale d'extrémité (12) s'étendant au voisinage d'un bord latéral externe (18) de la partie supérieure de la plaque porte-garniture (1), en ce que la seconde aile (9') comporte une extrémité libre rabattue dans la direction de la garniture de friction (2), en ce que la dite première aile (9) comporte une extrémité libre rabattue dans la direction d'un épaulement (19) du bord latéral (18) de la partie supérieure de la plaque porte-garniture (1) formé au voisinage de la garniture de friction (2), et en ce que l'ouverture (15), qui comporte un passage d'accès (16) débouchant latéralement, est formée dans une protubérance centrale (3) de la partie supérieure de la plaque porte-garniture (1).

## Claims

Friction-pad assembly equipped with an anti-noise spring for a disc brake, comprising a lining carrier plate (1) having an upper part not covered with a lining of friction material (2) and equipped with two passage orifices (6) for receiving guide rods (7) on either side of a central spring-mounting part (3) having a receptacle (15) composed of a through- aperture, and a spring made of elastic metal wire (4) having a central part (10) received in the receptacle (15) and a first wing (9) and a second wing (9') extending on either side of the central part (10), in order to interact by elastic bearing with the guide rods (7), characterized in that the first (9) of the said wings of the spring (4) is in the form of an oblong frame with two parallel longitudinal branches (11, 11') of a width greater than the thickness of the lining carrier plate (1), in that this frame is reclosed centrally by means of a transverse branch (13) extending through the aperture (15) and prolonged by a bending (14) round one (11) of the said longitudinal branches which itself is prolonged continuously to form the second wing (9') and has a transverse end branch (12) extending in the vicinity of an outer lateral edge (18) of the upper part of the lining carrier plate (1), in that the second wing (9') has a free end turned down in the direction of the friction lining (2), in that the said first wing (9) has a free end turned down in the direction of a shoulder (19) of the lateral edge (18) of the upper part of the lining carrier plate (1) formed in the vicinity of the friction lining (2), and in that the aperture (15), possessing an access passage (16) opening out laterally, is formed in a central protuberance (3) of the upper part of the lining carrier plate (1).

## Patentansprüche

Reibungsbackengarnitur mit Antiratterfeder für Scheibenbremse, umfassend eine Bremsbelaghalterungsplatte (1) bestehend aus einem oberen Teil, der nicht mit einem Reibungsbelag (2) beschichtet ist, versehen mit zwei durchgehenden Öffnungen (6) zur Aufnahme von Führungsstangen (7) an beiden Enden einer zentralen Federhalterung (3), die eine Lagerung (15) umfaßt bestehend aus einer durchgehenden Öffnung und einer Feder (4) aus elastischem Metalldraht, die ein Mittelstück (10), das in der Lagerung (15) sitzt, und einen ersten (9) und zweiten (9') Flügel umfaßt, die sich zu beiden Seiten dieses Mittelstücks (10) erstrecken, um als elastische Stütze mit den Führungsstangen (7) zusammenzuwirken, dadurch gekennzeichnet, daß der erste (9) dieser Flügel der Feder (4) in Form eines länglichen Rahmens mit zwei parallelen Längsarmen (11, 11') ausgebildet ist, die breiter als die Stärke der Bremsbelaghalterungsplatte (1) ist, dadurch, daß dieser Rahmen wieder zentral durch einen Querarm (13) geschlossen wird, der sich durch die Öffnung (15) hindurch erstreckt und in verlängerter Form um einen (11) dieser Längsarme herumgebogen ist (14), der sich seinerseits weiter verlängert, um den zweiten Flügel (9') zu bilden und einen äußeren Querarm (12) umfaßt, der sich in der Nähe des seitlichen Außenrands (18) des oberen Teils der Bremsbelaghalterungsplatte (1) erstreckt, dadurch, daß der zweite Flügel (9') ein freies Ende umfaßt, das in Richtung Bremsbelag (2) umgebogen ist, dadurch, daß der genannte erste Flügel (9) ein freies Ende umfaßt, das in Richtung eines in der Nähe des Reibungsbelags (2) gebildeten Vorsprungs (19) des seitlichen Außenrandes (18) des oberen Teil der Bremsbelaghalterungsplatte (1) umgebogen ist, und dadurch, daß die Öffnung (15), die einen seitlich ausmündenden Zugang (16) umfaßt, in einer zentralen Ausstülpung (3) des oberen Teils der Bremsbelaghalterungsplatte (1) ausgebildet ist.

FIG.1

FIG.3

FIG.2